# EUROPÄISCHE PATENTSCHRIFT

(11) **EP 2 975 109 B1**
(45) Veröffentlichungstag und Bekanntmachung des Hinweises auf die Patenterteilung: **31.01.2018**
(21) Anmeldenummer: 15177463.5
(22) Anmeldetag: 06.08.2010
(51) Int. Cl.: C12C 7/01, C12C 7/16, C12C 7/22, C12F 3/06, F23G 5/46

(54) **BEARBEITUNGSVERFAHREN**
BEER PROCESSING METHOD
PROCEDE DE LA FABRICATION DE LA BIÈRE

(30) Priorität: 07.08.2009 AT 12482009
(43) Veröffentlichungstag der Anmeldung: 20.01.2016
(62) Teilanmeldung aus: 10008230.4
(73) Patentinhaber: Schiffer, Katja, 7524 Zuoz (CH)
(72) Erfinder: Hertel, Dr.-Ing. Marcus, verstorben (CH)
(74) Vertreter: BiiP cvba

(56) Entgegenhaltungen:
- WO-A1-2007/121594
- WO-A1-2009/127430
- DE-A1- 4 411 443
- DE-A1- 4 428 978
- GB-A- 2 056 638
- US-A- 3 745 018
- Pfaffenhofener Kurrier: "Biomasse-Heizkraftwerk des Klosters eingeweiht", , 4. April 2006 (2006-04-04), Seiten 1-1, XP002603059, Gefunden im Internet: URL:http://www.kloster-scheyern.de/06-betr iebe/Hackschnitzelheizung/Hackschnitzelhei zung-Einw.pdf [gefunden am 2010-09-29]
- Landkreismagazin Pfaffenhofen: "Holz aus Brauereiwald für Biomasse-Kraftwerk", , 1. März 2004 (2004-03-01), Seiten 1-1, XP002603060, Gefunden im Internet: URL:http://82.165.16.99/eta_holzlogistik/u pload/546/Presseartikel%20vom%2001.%20Apri l%2004.jpg [gefunden am 2010-09-29]
- KROHNE: "Schneider Wiesse heizt mit KROHNE", , 4. August 2009 (2009-08-04), Seiten 1-2, XP002603061, Gefunden im Internet: URL:http://www.krohne.com/fileadmin/media- lounge/PDF-Download/Press_Releases/2009/PR _20090804_Schneider_Weisse_KROHNE_DE_v3.pd f [gefunden am 2010-09-29]
- Stephen Law: "Brewing Biomass", , 21. Juni 2008 (2008-06-21), Seiten 1-2, XP002603062, Gefunden im Internet: URL:http://kn.theiet.org/magazine/issues/0 811/brewing-biomass/cfm [gefunden am 2010-09-29]
- Eneratio/ Olaf Ahrens: "Bau des Biomasse-Heizkraftwerkes der Stadt Elmshorn", , 21. Oktober 2004 (2004-10-21), Seiten 1-36, XP002603063, Gefunden im Internet: URL:http://www.eneratio.de/cms/upload/Inha ltsbilder/PDF_Daten/vortrag_bbe.pdf [gefunden am 2010-09-27]
- Bundesverband BioEnergie e.V.: "Fachkongress für Holzenergie", , 21. Oktober 2004 (2004-10-21), Seiten 1-18, XP002603064, Gefunden im Internet: URL:http://users.skynet.be/erbe/Documents/ Agenda/IHE04_KoPro.pdf [gefunden am 2010-09-28]
- Anonymous/ Wikipedia: Bierbrauen , 7. Januar 2008 (2008-01-07), Seiten 1-7, XP002603065, Gefunden im Internet: URL:http://web.archive.org/web/20080107030 903/http://de.wikipedia.org/wiki/Bierbraue n [gefunden am 2010-09-29]
- C.A.R.M.E.N.: "Biomasse Heizkraftwerk Pfaffenhofen", , 1. November 2001 (2001-11-01), Seiten 1-4, XP002603066, Gefunden im Internet: URL:http://82.165.16.99/eta_holzlogistik/u pload/452/Info-Broschuere%20CARMEN.pdf [gefunden am 2010-09-29]
- RUSS W ET AL: "Biomass for heating applications in breweries /// Biomasse zur Wärmebereitstellung in Brauereien", BRAUWELT, NUERNBERG, DE, Bd. 146, Nr. 21, 1. Januar 2006 (2006-01-01), Seiten 612-616, XP009139345, ISSN: 0724-696X
- Hertel GmbH: "Messeneuheiten zur Brau Beviale 2010", , 28. September 2010 (2010-09-28), Seiten 1-1, XP002603067, Gefunden im Internet: URL:http://www.hertel.cc/content/messeneuh eiten-zur-braubeviale-2010/index.php [gefunden am 2010-09-28]

## Beschreibung

Die Erfindung betrifft ein Verfahren zur Bierbereitung, wobei aus Malz eine Maische hergestellt wird, aus der Maische durch einen Läuterprozess eine Würze gewonnen, die Würze anschließend einer Temperaturbehandlung unterzogen, aus der behandelten Würze der Heißtrub abgeschieden, und nach der Heißtrubabscheidung aus der Würze durch eine Gärung Bier gewonnen wird. Eine Ausführungsform eines solchen Verfahrens ist beispielsweise in der DE 44 114 43 A1 beschrieben. Die Erfindung beschäftigt sich insbesondere damit, die Energieeffizienz der Bierbereitung zu steigern.

Zur Bierbereitung wird in einem der ersten Schritte Malz eingemaischt, wobei die Malzbestandteile, in der Regel nach einer vorherigen Vermahlung, mit Wasser vermischt werden, um die festen Malzbestandteile des Mehlkörpers in Lösung zu bringen. Hierbei wird in der Regel das gesamte Malzkorn, also inklusive der Spelzen, eingemaischt. Gegebenenfalls wird eine Maische auch unter zusätzlicher Verwendung sogenannter Rohfrucht - hierunter ist unvermälztes Getreide zu verstehen - hergestellt. Darüber hinaus sind auch Verfahren bekannt, bei welchen die Spelzen zumindest teilweise vor dem Einmäischen vom Malz abgetrennt werden und zu späteren Zeitpunkten dem Brauprozess wieder zugeführt werden. Insbesondere werden die abgetrennten Spelzen im Läuterbottich vorgelegt. Eine Ausführungsform eines solchen Verfahrens ist beispielsweise in der DE 44 114 43 A1 beschrieben. Hierdurch kann der restliche Mehlkörper vor dem Einmaischen stärker vermahlen werden, da hier auf einen guten Zustand der Spelzen, welcher für einen effektiven Läuterprozess benötigt wird, keine Rücksicht mehr genommen werden muss. Durch die Vermeidung der Zugabe der Spelzen zum Maischen soll auch erreicht werden, dass weniger unedle Malzbestandteile sowie Farb- und/oder unerwünschte Aromastoffe, welche sich vornehmlich in den Spelzen befinden, in die Würze eingebracht werden. Aus demselben Grund werden auch Verfahren durchgeführt, bei welchen die Spelzen erst zu späteren Zeitpunkten nach dem Einmaischen der Maische zugesetzt werden, da hierdurch vor allem Extraktions- und Reaktionszeiten verringert werden können. Darüber hinaus sind auch Verfahren bekannt, bei welchen auf eine Zugabe der Spelzen zum Brauprozess vollkommen verzichtet wird. So wird beispielsweise in der US 3,745,018 A ein Verfahren angegeben, bei welchem die Spelzen des Malzes vor dem Einmaischen vollkommen abgetrennt werden und die in der Würze enthaltenen Feststoffe vor einer Würzekochung durch Filtrations- oder Rotationsverfahren abgetrennt werden.

Die Spelzen oder die aus ihnen resultierenden Treber (hierunter sind die im Anschluss an einen Läuterprozess übrigbleibenden Feststoffe, welche vor allem aus nassen Spelzen bestehen, zu verstehen) stellen im Brauprozess ein Abfallprodukt dar. Da der Verkauf dieses Abfallproduktes als Viehfutter immer schwieriger wird, wird bereits seit längerem versucht, es energetisch zu verwerten. So werden die aus dem Brauprozess resultierenden nassen Spelzen beziehungsweise die Treber beispielsweise dazu verwendet, durch eine anaerobe Fermentation Biogas zu gewinnen. Aufgrund des hohen und schwer abbaubaren Cellulose- und des kaum oder nicht abbaubaren Ligninanteils gestaltet sich dies jedoch als sehr aufwendig, da beispielsweise alkalische Vorbehandlungen, ein Zusatz von Enzymen und/oder mechanisch-chemische Vorbehandlungen benötigt werden. Aus diesem Grund sind diese Verwertungsverfahren bisher nicht wirtschaftlich und haben sich demzufolge auch nicht durchsetzen können. Darüber hinaus sind auch Verfahren bekannt, bei welchen die nassen Spelzen beziehungsweise die Treber zur Energiegewinnung verfeuert werden. Zur Erzielung der Selbstbrennbarkeit müssen die Treber jedoch zwingend vorgetrocknet werden, was meist durch mechanische Bandpressen erfolgt. Hierdurch wird zwar eine Brennbarkeit erreicht, allerdings weisen die Spelzen beziehungsweise die Treber immer noch einen immens hohen Wassergehalt auf, wodurch ihr Brennwert deutlich minimiert ist und die Effizienz solcher Verfeuerungsverfahren ohne eine weitergehende Vortrocknung nahezu gegen Null geht. Da eine solche weitergehende Vortrocknung aber sehr energieintensiv ist, wurden Bestrebungen unternommen, diese effizienter zu gestalten. So ist aus der EP 1 007 884 B1 beispielsweise ein Verfahren bekannt, bei welchem zur weiteren Trocknung Rauchgase verwendet werden, welche im Energieverbund einer Brauerei ohnehin anfallen. Hierdurch soll ein geringerer Wassergehalt und somit ein höherer Brennwert erzielt werden. Durch die Nutzung von ohnehin vorhandener Wärme ergeben sich hier natürlich energetische Vorteile, allerdings ist auch hierdurch bei Betrachtung des gesamten Prozesses aufgrund des nach dem Einmaischen immens hohen Wassergehaltes der Spelzen beziehungsweise der Treber noch keine effiziente energetische Nutzung gegeben, weswegen sich auch dieses Verfahren nicht durchsetzen konnte.

Aufgabe der Erfindung ist es, die Energieeffizienz einer Bierbereitung der eingangs genannten Art weiter zu verbessern. Hierzu soll ein Verfahren zur Bierbereitung sowie eine entsprechend geeignete Vorrichtung angegeben werden.

Diese Aufgabe wird für ein Verfahren zur Bierbereitung, wobei aus Malz eine Maische hergestellt, aus der Maische durch einen Läuterprozess eine Würze gewonnen, die Würze einer Temperaturbehandlung unterzogen, aus der behandelten Würze der Heißtrub abgeschieden, und nach der Heißtrubabscheidung aus der Würze durch eine Gärung Bier gewonnen wird, erfindungsgemäß dadurch gelöst, dass die Spelzen vor dem Einmaischen nur teilweise vom Malz abgetrennt werden und ein Teil der im verwendeten Malz vorhandenen Spelzen dem Brauprozess wieder zugeführt wird, wobei ferner ein Teil der abgetrennten Spelzen im trockenen Zustand zur Energiegewinnung verfeuert wird und die bei der Verfeuerung frei werdende Energie für den Brauprozess genutzt wird, wobei die Reduktion des Spelzenzusatzes zum Brauprozess beim Einsatz eines Läuterbottichs zwischen 10 und 60 % und beim Einsatz eines Maischefilters oder einer Zentrifuge zur Läuterung zwischen 30 und 95 % beträgt.

Unter Malz wird hierbei Malz in jeder Form verstanden. Insbesondere sind hierbei ganze Malzkörner, aber vor allem auch das im Zuge einer Zerkleinerung resultierende Malzschrot zu verstehen.

Unter nur "teilweise vom Malz abgetrennt" wird hierbei verstanden, dass zumindest ein Teil der im verwendeten Malz vorhandenen Spelzen dem Brauprozess zugeführt wird, damit Läutervorgänge effizient ablaufen können. So fallen neben einem direkten Mit-Einmaischen der (nicht abgetrennten) Spelzen zusammen mit dem Malz hierunter insbesondere auch Verfahren, bei welchen spelzenfreies Malz beziehungsweise Malzschrot zunächst alleine eingemaischt wird und Spelzen erst zu späteren Schritten der Maische zugegeben oder in Läutereinrichtungen, wie Läuterbottichen oder Maischefiltern, vorgelegt werden.

Die Erfindung erkennt dabei in einem ersten Schritt, dass die im Malz vorhandenen Spelzen in ihrem trockenen Zustand einen sehr hohen Brennwert aufweisen, welcher bei herkömmlichen Brauverfahren aufgrund der Zumischung zu Wasser aber nicht mehr genutzt werden kann, da Spelzen nach dem Einmaischen im nassen Zustand vorliegen und auch keine Selbstbrennbarkeit mehr aufweisen. Um diese wieder Herzustellen, muss der Feuchtigkeitsgehalt wieder mindestens unter 58 % gebracht werden, was naturgemäß einen äußerst energieintensiven Vorgang darstellt. Aber selbst nach einer ausreichenden Trocknung und einem Erreichen der Selbstbrennbarkeit kann eine Verbrennung der feuchten Spelzen nicht effizient durchgeführt werden, da bei der Verbrennung immer auch die Verdampfungsenthaltpie des noch enthaltenen Wassers aufgebracht werden muss, sodass sich hier zwar ein hoher Heizwert, jedoch ein niedriger Brennwert ergibt und eine Verbrennung ohne die Rückgewinnung der Enthalpie der dabei entstehenden Wasserdämpfe äußerst ineffizient ist. Die Erfindung erkennt somit, dass eine energetische Verwertung der Spelzen durch Verfeuerung nach einem Zuführen in den Brauprozess - und somit einer Erhöhung des Wassergehaltes - aufgrund der für das enthaltene Wasser aufzubringenden Verdampfungsenthalpie nicht mehr effizient gestaltet werden kann. Werden Spelzen jedoch vor dem Einmaischen, also in ihrem trockenen Zustand verbrannt, muss weder die Energie für den Trocknungsvorgang aufgebracht werden, noch ist der Brennwert der Spelzen geringer als derjenige trockener Getreideschalen. Im Gegenteil: Die Erfindung erkennt, dass die Spelzen nach dem im Mälzungsprozess zu vollziehenden Darrprozess derart trocken sind, dass sie einen im Vergleich zu anderem Getreide enorm hohen Brennwert aufweisen. Im Trockenzustand haben Spelzen ungefähr einen identischen Brennwert wie Braunkohle. Mit dem geringen Feuchtigkeitsgehalt, den die Spelzen nach dem Darrprozess aufweisen, liegt ihr Brennwert je nach Restfeuchte zwischen 4,5 und 5,2 kWh/kg. Insofern entsprechen 1 kg Spelzen vor dem Einmaischen ca. dem Brennwert von ca. 2 I Heizöl leicht oder ungefähr 1 kg Erdgas. Dies macht deutlich, welchen Brennwert Spelzen vor einer Vermischung mit Wasser zum Einmaischen besitzen.

In einem weiteren Schritt erkennt die Erfindung, dass zur Herstellung einer Würze nicht alle Spelzen in den Brauprozess eingebracht werden müssen. Vielmehr ist es auch bei konventionellen Läuterprozessen durchaus möglich und für die Effizienz auch durchaus sinnvoll, nur einen Teil der Spelzen einzumaischen beziehungsweise zu späteren Schritten dem Brauprozess zuzuführen. So können herkömmliche Läuterprozesse auch mit beispielsweise nur der Hälfte der Spelzen des eingesetzten Malzes problemlos durchgeführt werden. Auch hier hat die sich im Läuterbottich ausbildende Filterschicht noch eine genügend klärende Wirkung, jedoch einen geringeren Widerstand, sodass Läuterprozesse auch in einem herkömmlichen Läuterbottich beschleunigt ablaufen können. Bei Verwendung von Maischefiltern zum Läutern kann die dem Brauprozess zugesetzte Menge noch deutlich weiter reduziert werden.

Die Erfindung erkennt schließlich, dass Spelzen, die nicht dem Brauprozess zugeführt werden, aufgrund ihres hohen Brennwertes zur Energiegewinnung verfeuert werden können, ohne hierbei vor dem Verbrennungsvorgang eine effizienzmindernde Trocknung durchführen zu müssen. Zusätzlich erkennt die Erfindung, dass auch bei einer nicht idealen Trennschärfe der Abtrennung der Spelzen das Verfahren noch überaus wirtschaftlich ist, da der hierbei zusätzlich zu den reinen Spelzen ebenfalls vom Malz abgetrennte - und somit nicht dem Brauprozess zugeführte - Extrakt ebenfalls einen hohen Brennwert aufweist und somit bei einer Verfeuerung effizient energetisch genutzt werden kann. Ein teilweiser Extraktverlust und somit eine geringere Sudhausausbeute kann somit zumindest partiell ausgeglichen werden. Unterstützt wird dies durch die Tatsache, dass bei herkömmlichen Brauverfahren aufgrund des höheren Spelzenanteils auch ein größerer Anteil an Extrakt als auswaschbarer und aufschließbarer Extrakt in den Treben verbleibt, sodass hier ohnehin größere Extraktverluste zu verzeichnen sind. Die Erfindung erkennt somit, dass bei einer Abtrennung von Teilen der Spelzen des zum Brauen eingesetzten Malzes im trockenen Zustand und deren anschließender Verfeuerung große Mengen von Energie frei werden, welche insbesondere für den Brauprozess sinnvoll genutzt werden können. Demnach erkennt die Erfindung, dass die Spelzen im trockenen Zustand kein Abfallprodukt, sondern einen hochwertigen Energieträger darstellen, mit welchem nahezu der gesamte Energiebedarf bei der Bierbereitung abgedeckt werden kann.

Unter trockenem Zustand wird hierbei jeder Feuchtigkeitsgehalt verstanden, welchen Malz nach dem Mälzungsprozess aufweisen sowie zusätzlich während einer Lagerung aufnehmen kann, bevor das Malz dem Brauprozess zugeführt wird und folglich in großem Maße mit Wasser in Verbindung kommt. Spelzen eines leicht vorkonditionierten Malzes fallen demzufolge ebenfalls unter den Begriff trocken, da ihr Wassergehalt im Gegensatz zu dem eingemaischter Spelzen immer noch vernachlässigerbar gering ist. Trocken bedeutet demzufolge insbesondere, dass die Spelzen noch nicht eingemaischt beziehungsweise Wasser zugegeben wurden.

Unter Verfeuerung wird jedwede thermische Verwertung durch Verbrennen verstanden. Die Funktionsweise der Verfeuerung kann hierbei beispielsweise derart umschrieben werden, dass in den Spelzen gespeicherte Energie durch Oxidation in Form einer Verbrennung in nutzbare Energie (Wärme) umgewandelt wird. Insbesondere ist unter Verfeuerung eine direkte Verbrennung zu verstehen.

Insbesondere wird unter dem Begriff Verfeuerung aber auch ein Prozess verstanden, bei welchem zur Energiegewinnung aus den Spelzen durch eine thermische Vergasung vorher ein Gas produziert wird. Das hierbei erzeugte Gas kann somit zur Energiegewinnung verwendet werden, wobei das entstandene "Spelzengas" insbesondere in ohnehin in der Brauerei vorhandenen beziehungsweise bestehenden gasbetriebenen Kesseln verfeuert beziehungsweise verbrannt wird. Hierbei bietet sich vorteilhafterweise eine zumindest teilweise Zumischung des aus den Spelzen und gegebenenfalls weiteren Stoffen erzeugten Gases zu den sonst verwendeten Gase, wie beispielsweise Erdgas, an. Die Herstellung eines "Spelzengases" kann prinzipiell mit einer Holz- beziehungsweise Stroh(ballen)vergasung verglichen werden. Da der Prozess der thermischen Biomassenvergasung cellulosehaltiger Produkte wie Holz oder Stroh bekannt ist, wird im Folgenden nicht näher darauf eingegangen sondern auf die einschlägige Fachliteratur Bezug genommen.

Die Entfernung der Spelzen vom Malz kann beispielsweise durch Mühlen erfolgen, welche Einrichtungen zum Abtrennen der Spelzen, wie beispielsweise Windsichter oder Siebe - und hier insbesondere Schüttel- oder Rüttelsiebe -, enthalten. Hierbei können zerkleinerte Spelzen in sehr reiner Form erhalten werden, wodurch Extraktverluste minimal sind. Solche Mühlen, welche in der Regel auch als Schrotmühle eingesetzt werden können und meist als 6-Walzen-Mühle aufgebaut sind, sind - auch im Braubereich - hinlängliche bekannt, weswegen hier auf deren Funktionsweise nicht näher eingegangen wird. Darüber hinaus kann ein Abtrennen der Spelzen beispielsweise auch durch Reibe- oder Schälmaschinen erfolgen, wobei hier ein Abtrennen der Spelzen von einer gezielten Zerkleinerung des Malzkornes erfolgt. Auch solche Maschinen sind in der getreideverarbeitenden Industrie hinlänglich bekannt. Eine Ausführungsform einer Schälmaschine für Brauprozesse wird beispielsweise in der DE 10 2006 019 609 A1 beschrieben.

Welche energetischen Vorteile durch das erfindungsgemäße Verfahren in einer Brauerei erzielt werden können, soll an folgendem allgemeinen Beispiel kurz erläutert werden: Eine Brauerei, welche mit einer Malzschüttung von 16 kg/hl, einer Gesamtverdampfung von 4 %, einer Einmaischetemperatur von 64 °C, einem 50 %igen Hauptgussanteil und einer Kochtemperatur von ca. 100 °C (atmosphärisch) braut und welche außer bei der Würzekühlung keine Maßnahmen zur Wärmebeziehungsweise Energierückgewinnung betreibt, benötigt unter Vernachlässigung spezifischer Wirkungsgradverluste Energie von ca. 6 kWh pro hl Ausschlagwürze. Bei einem Spelzenanteil (inkl. des daran noch gebundenen Extraktes) des eingesetzten Malzes von ca. 15 % kann diese Brauerei durch eine Verfeuerung von nur 30 % der entfernten, trockenen Spelzen ca. 3,5 kWh Energie erzeugen und somit bereits über 50 % der zur Herstellung der Würze benötigten Energie selbst erzeugen. Bei dieser geringen Reduktion der dem Brauprozess zugefügten Spelzen, kann ein bestehenden Läuterbottich problemlos weiterbetrieben werden, da sich auch hier immer noch eine ausreichende Filterschicht durch die noch zugeführten Spelzen ergibt. Bei einer Reduktion des Spelzeneinsatzes um 55 % kann diese Brauerei sogar die gesamte, für die Herstellung der Ausschlagwürze benötigte Energie alleine durch eine erfindungsgemäße Verfeuerung der nicht zugesetzten, trockenen Spelzen in der Brauerei erzeugen. Durch die Verwendung von Wärmerückgewinnungsapparaturen, wie beispielsweise Pfannendunstkondensatoren oder die Einführung neuer Verfahren, mit welchen die zum Austreiben unerwünschter Aromastoffe benötigte Gesamtverdampfung deutlich reduziert werden kann, wie beispielsweise der Rektifikationswürzekochung, kann sich durch das erfindungsgemäße Verfahren im Sudhaus sogar ein Energieüberschussergeben. Bei einer ausreichend großen Reduktion des Spelzenzusatzes, wie sie vor allen bei der Verwendung moderner Maischefilter möglich ist, kann durch das erfindungsgemäße Verfahren im Idealfall sogar die gesamte, in einer Brauerei benötigte Energie aus den abgetrennten Spelzen gewonnen werden. Dieses Beispiel macht deutlich, welche Bedeutung das erfindungsgemäße Verfahren für die gesamte Braubranche besitzt.

Die Reduktion des Spelzenzusatzes zum Brauprozess kann hierbei je nach Brauereigegebenheiten variiert werden. Prinzipiell ist es jedoch vorteilhaft, eine Reduktion bis zu dem Maße durchzuführen, zu welchem der Braubeziehungsweise Läuterprozess noch problemlos oder sogar verbessert abläuft. Letzteres kann dadurch geschehen, da bei herkömmlichen Brauprozessen das Verhältnis aus zugesetzten Spelzen zu eingesetztem Extrakt oft zu hoch ist, sodass sich auch zu hohe Filterschichten ergeben können, welche der zu klärenden Würze einen sehr hohen Widerstand entgegensetzen, weswegen Läuterprozesse stark verlangsamt ablaufen und oftmals nur durch einen massiven Einsatz des Hack- beziehungsweise Schneidewerks aufrecht erhalten werden können. Beim Einsatz herkömmlicher Läuterbottiche erfolgt eine Reduktion des Spelzenzusatzes zum Brauprozess vorteilhafterweise um 10 bis 60 %, insbesondere um 20 bis 50 %. Bei Verwendung von Maischefilter oder Zentrifugen zur Läuterung liegt eine Reduktion des Spelzenzusatzes zum Brauprozess vorteilhafterweise zwischen 30 und 95 % (zur Unterstützung des Filtrationsprozesses sollte auch bei Verwendung moderner Maischefilter ein Mindestanteil von Spelzen in der Maische vorhanden sein), insbesondere bei 50 bis 80 %. Vorteilhafterweise werden hierbei auch alle abgetrennten Spelzen zur Energiegewinnung verfeuert.

In einer - vor allem "außerhalb des Reinheitsgebotes" - vorteilhaften Ausgestaltung der Erfindung wird zusätzlich zum Malz dem Brauprozess auch ein gewisser Anteil an Rohrfrucht zugesetzt beziehungsweise auch mit dieser eingemaischt. Unter Rohrfrucht wird hierbei Getreide von einer Vermälzung verstanden. Zur Verbesserung der Maischarbeit können in diesem Fall auch Enzyme zugesetzt werden. Vorteilhafterweise wird auch die Rohrfrucht zumindest teilweise von der Schale separiert und die Schale zur Energiegewinnung verfeuert. Da die Schale von Rohrfruchteinen höheren Wassergehalt aufweist als die Spelzen von Malz, kann diese vor einer Verbrennung vorgetrocknet werden. Prozesstechnisch kann mit der Schale von Rohrfrucht so verfahren werden, wie mit den Spelzen von Malz, wobei zur Abtrennung der Schale aufgrund der Beschaffenheit von Rohrfrucht vorzugsweise Reib- oder Schälmaschinen verwendet werden. Die für die Verfeuerung von Spelzen beschriebenen Vorgehensweisen können auch auf die Verfeuerung von Rohrfruchtschale angewendet werden.

In einer vorteilhaften Ausgestaltung der Erfindung werden die Spelzen direkt vor dem Einmaischen vor und/oder während des Schrotens vom Malz entfernt. Es wird nur ein Teil der Spelzen von den Malzkörnern abgetrennt während der Rest am Korn verbleibt und mit dem Korn eingemaischt wird. Für eine derartige Ausgestaltung kommen zur Entfernung der Spelzen vor allem Schälmaschinen zum Einsatz, da bei diesen der Schälgrad - in der Regel stufenlos - eingestellt werden kann.

In einer weiteren vorteilhaften Ausführung wird das Malz vor dem Brauprozess von den Spelzen befreit und das Malz sowie die abgetrennten Spelzen bis zum Brauprozess gelagert. Dies kann zum einen in der Brauerei geschehen, hat vor allem aber den Vorteil, dass der Trennvorgang bereits beim Malzproduzenten vollzogen werden kann. Hierdurch können Brauereien ihr Malz inklusive der abgetrennten Spelzen direkt beziehen, ohne eine - unter Umständen teure - Einrichtung zur Spelzentrennung selbst anschaffen zu müssen. Eine Brauerei kann somit Malz und Spelzen separat beziehen und in der Brauerei beispielsweise einen Teil der Spelzen dem Brauprozess zuführen, während der restliche Teil zur Energiegewinnung verfeuert wird.

Die abgetrennten Spelzen werden vorteilhafterweise direkt einer Verfeuerungseinrichtung zugeführt. Diese Zuführung kann durch Förderbänder oder Leitungssysteme erfolgen. Da die Abtrennung der Spelzen bereits vor und/oder während des Einmaischens erfolgt, kann bei einer direkten Zuführung zu einer Verfeuerungseinrichtung mit den bei einem Sud abgetrennten Spelzen bereits Energie für den gleichen Sud gestellt werden. Die Energieproduktion erfolgt hier sozusagen "Just-in-Time", wodurch der logistische sowie räumliche Aufwand für eine Lagerung der Spelzen entfällt.

In einer anderen, ebenfalls vorteilhaften Ausführung werden die abgetrennten Spelzen vor einer Verfeuerung zwischengelagert. Hierdurch können sie exakt dann zur Energiegewinnung verfeuert werden, wenn diese benötigt wird. Insbesondere kann hierdurch auch Energie für Prozesse außerhalb des Sudhauses erzeugt werden. Im "Extremfall" kann eine Verbrennung auch außerhalb der Brauerei erfolgen, wodurch mittels eines eigentlichen Abfallproduktes aus Brauprozessen auch Energie für brauereifremde Zwecke bereitgestellt werden. Gerade in diesem Fall können die abgetrennten, trockenen Spelzen auch noch zu gepressten Brennstoffen, wie beispielsweise Pellets oder Briketts, weiterverarbeitet werden. Um Transportwege zu vermeiden, erfolgt eine Verfeuerung aber in der Regel direkt in einer Brauerei, da hiermit Energie für jedweden Prozess der Bierherstellung, angefangen vom Maischen bis hin zur Reinigung des zurückgeführten Leergutes, erzeugt werden kann.

Zur Verfeuerung der Spelzen können herkömmliche Brennöfen zum Einsatz kommen, wie sie auch bei der Verfeuerung von Hackschnitzeln oder Holzpellets Verwendung finden. Solche Verfeuerungseinrichtungen sind hinlänglich bekannt, weswegen hier nicht weiter auf deren Aufbau und Funktionsweise eingegangen wird.

Vorteilhafterweise werden solche Brennöfen derart dimensioniert, dass unter zusätzlicher Verfeuerung von Brennstoffen, welche bevorzugt auch aus nachwachsenden Rohstoffen hergestellt werden - wie beispielsweise (Holz-)Pellets und/oder Hackschnitzel - der Wärmeenergiebedarf des Sudhauses oder sogar der gesamten Brauerei erzeugt werden kann. Da durch das erfindungsgemäße Verfahren durch die Verfeuerung der Spelzen bereits ein großer Teil der benötigten Energie oder Wärme bereitgestellt werden kann, müssen hier nur verhältnismäßig geringer Mengen solcher Brennstoffe zugekauft werden. Dies hat aber den entscheidenden Vorteil, dass Brauereien ihre Abhängigkeit von fossilen Brennstoffen, wie beispielsweise Erdöl oder Erdgas, verlieren. Darüber hinaus steigt hierdurch die "Umweltfreundlichkeit" des Brauprozesses deutlich an.

Für ein schnelleres und vollständigeres Verbrennen der Spelzen und somit zur Effizienzsteigerung werden die Spelzen vorteilhafterweise - eventuell unter einem vorangegangenen weiteren Zerkleinern und/oder Vermahlen - zusammen mit Luft in die Brennkammer eingeblasen. Im Gegensatz zu einem einfachen Vorlegen können sich hierdurch Vorteile bei der Erzeugung von Wärme/Energie ergeben.

Die bei der Verfeuerung freiwerdende Wärme wird vorteilhafterweise zur Erzeugung von Prozessdampf verwendet. Hierzu ist die Verfeuerungseinrichtung vorteilhafterweise direkt mit einem Dampfkessel verbunden. Darüber hinaus kann die Wärme auch zur Bereitstellung von Heißwasser verwendet werden. Mit dem so erzeugten Dampf oder Heißwasser können dann - beispielsweise über einen in der Regel ohnehin vorhandenen Dampfkreislauf - vorteilhafterweise die einzelnen Sudhauseinrichtung beheizt werden. Insbesondere kann der Dampf oder das Heißwasser für die Maischebereitung und/oder die Würzekochung verwendet werden.

Darüber hinaus kann die bei der Verfeuerung freiwerdende Energie unter Einsatz entsprechenden dazu geeigneter Einrichtungen wie Generatoren auch zur Erzeugung von elektrischer Energie beziehungsweise Strom verwendet werden, welcher insbesondere in den Stromkreislauf der Brauerei eingespeist werden kann. Insbesondere eignet sich das erfindungsgemäße Verfahren auch bei einer Verwendung von Blockheizkraftwerken (BHKW).

Die bei der Verbrennung entstehenden Abgase werden vorteilhafterweise Wärmetauschern zugeführt, wodurch die in ihnen enthaltene Wärmer, beispielsweise für Heizkreisläufe, genutzt werden kann. Hierdurch steigt die Effizienz des erfindungsgemäßen Verfahrens noch weiter an.

Darüber hinaus kann die bei der Verfeuerung entstehende Abwärme vorteilhafterweise zur Trocknung von weiterem Material verwendet werden. Insbesondere können die entweichenden Rauchgase für die Trocknung von Treber, Abfallhefe und/oder nasser Altetiketten eingesetzt werden, wodurch deren Wassergehalt abnimmt. Dieses Material kann dann auch für darauffolgende Verfeuerungsvorgänge den Spelzen zugegeben werden, wodurch zusätzliche Energie gewonnen werden kann.

Des Weiteren können zur weiteren Energiegewinnung auch Reststoffe beziehungsweise Abfälle, welche in einer Brauerei anfallen, mit verbrannt werden. Insbesondere können hier gelagerte Altetiketten oder Kartonagen verfeuert werden. Hierdurch kann sich auch der weitere Vorteil ergeben, dass hierfür keine Entsorgungsgebühren entrichtet werden müssen.

Zur Steigerung der Effizienz des Verfeuerungsvorgangs kann zur Verfeuerung anstelle von Luft zumindest teilweise insbesondere auch Sauerstoff oder sauerstoffangereicherte Luft verwendet werden. Letztere kann mittels sogenannter Sauerstofferzeuger leicht aus Umgebungslust erzeugt werden. Da dieser Vorgang energieintensiv ist, müssen hier stets der Energieaufwand bei der Sauerstofferhöhung sowie die Effizienzsteigerung bei einer Verfeuerung beziehungsweise Verbrennung unter sauerstoffangereicherter, anstelle von normaler, Luft betrachtet und "gegeneinander abgewogen" werden. In Brauereien hingegen, in welchen ohnehin Stickstofferzeuger zum Einsatz kommen, fällt bei der Stickstoffanreicherung aus Luft ohnehin immer sauerstoffangereicherte Luft als Bei- beziehungsweise "Abfall"-Produkt an, so dass diese Luft - eventuell nach einer vorherigen Sammlung und Lagerung - vorteilhafterweise für die Verfeuerung beziehungsweise Verbrennung der abgetrennten Spelzen verwendet werden kann.

Die im Anschluss an die Verfeuerung entweichenden Rauch- beziehungsweise Abgase werden vorteilhafterweise Reinigungseinrichtungen, wie beispielsweise Filtern, Rauchgaswäschern oder dergleichen zugeführt. Hierdurch kann die - im Gegensatz zu herkömmlichen Brauverfahren ohnehin geminderte - Umweltbelastung des erfindungsgemäßen Verfahrens noch weiter gesenkt werden. Da die Spelzen im Zuge des Wachstums der Pflanze ungefähr die gleiche Menge CO₂ aufgenommen haben, wie bei ihrer Verfeuerung frei wird, ist der CO₂-Kreislauf unter Vernachlässigung vorangegangener Trocknungsvorgänge beim Mälzen - welche jedoch ohnehin stattfinden müssen - zumindest annährend geschlossen. Die erfindungsgemäße Art der Energiegewinnung ist somit klimaneutral, das Verfahren sehr umweltschonend.

Im Gegensatz zu Treber stellt der sich bei einer Verbrennung ergebende Ascherückstand keinen Sondermüll mehr dar, wodurch er - auch aufgrund des deutlich geringeren Volumens - einfach entsorgt werden kann. Die sich ergebende Asche kann aber auch als wertvolles Düngemittel herangezogen werden, da sie noch einen verhältnismäßig hohen Nährstoffgehalt aufweist. Im Gegensatz zu Asche der meisten Holzarten - vor allem derjenigen von behandeltem Holz - enthält die Asche, welche aus der erfindungsgemäßen Verfeuerung trockener Spelzen resultiert, aber verhältnismäßig wenig Schadstoffe, insbesondere Schwermetalle, welche nicht nur die Umwelt, sondern auch das Pflanzenwachstum beeinträchtigen würden. Die aus dem Verfahren resultierende Asche kann aufgrund ihrer Beschaffenheit folglich sehr gut als Naturdünger dienen, da sie zum einen stark basisch ist und somit die Pufferkapazität von versauerten Böden erhöhen kann und zum anderen sehr schnell wirkt, da sie sich sehr gut löst. Die Asche wird vorteilhafterweise anderem Düngemittel oder Pflanzenerde zugesetzt. Die Asche kann demzufolge auch zum Düngen von Feldern benutzt werden, auf welchen Braugetreide angepflanzt wird. Somit ist auch hier der Kreislauf geschlossen und Brauereien können ihrem Ruf nach einer ökologischen sinnvollen, nachhaltigen Produktion noch weiter gerecht werden. Insbesondere entspricht die Düngung mit dieser Asche auch ökologischen Richtlinien, solange das verwendete Braugetreide nicht mit chemischen beziehungsweise künstlichen Dünge- und/oder Schädlingsbekämpfungsmitteln behandelt wurde. Da die Asche, wie beschrieben, ein sehr hochwertiges Düngemittel darstellt, welches insbesondere auch gewinnbringend verkauft werden kann, können sich hier weitere monetäre Vorteile für Brauereien - welche auch aus einer Vermeidung von Entsorgungsvorgängen resultieren - ergeben.

Wie für das Verfahren vorgeschrieben, kann durch die nur teilweise Entfernung der Spelzen vom Malz und deren zumindest teilweiser Verbrennung im trockenen Zustand in einer Einrichtung zur Verfeuerung der abgetrennten Spelzen der Energiebedarf beim Brauen drastisch reduziert werden. Hierdurch entstehen deutliche Kostenvorteile für Brauereien. Durch die Reduzierung des Bedarfs fossiler Brennstoffe kann darüber hinaus auch ein merklicher Beitrag zum Umweltschutz geleistet werden.

Ein Ausführungsbeispiel der Erfindung wird anhand einer Zeichnung näher erläutert. Dabei zeigt die einzige Figur schematisch eine Vorrichtung zu Bierbereitung

Dabei zeigt die einzige Figur schematisch eine Vorrichtung zur Bierbereitung, wobei die Vorrichtung nicht Teil der Erfindung ist.

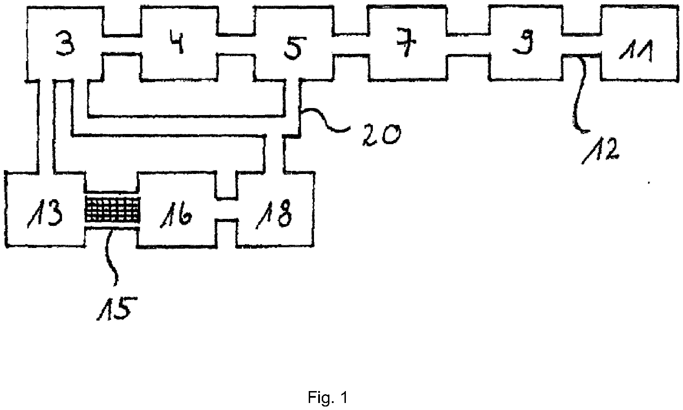

In Fig. 1 ist schematisch eine Vorrichtung 1 zur Bierbereitung dargestellt. Die Vorrichtung 1 umfasst hierbei einen Maischebottich 3, der der Zubereitung von Maische insbesondere unter der Verwendung von Malz dient. An den Maischebottich 3 ist ein Läuterbottich 4 zur Durchführung einer Fest-Flüssigkeit-Trennung und somit zur Würzeerzeugung sowie eine Würzepfanne 5 angeschlossen, in welcher die Temperaturbehandlung der Würze zum Abreichern unerwünschter und zum Anreichern gewollter Aromastoffe durchgeführt wird. Bei üblichen Brauvorgängen spricht man hierbei auch von der "Würzekochung". Die Würze kann, wie später noch beschrieben, aber auch einer Rektifikation unterzogen oder auch in einer sonstigen Art und Weise temperaturbehandelt werden. Der Würzepfanne 5 ist ein Heißtrubabscheider 7 nachgeschaltet, in welchem die während der Temperaturbehandlung der Würze gebildeten Eiweiße abgeschieden werden. Geschieht dies durch eine Zirkulation, so spricht man auch von einem "Whirlpool". Die aus dem Heißtrubabscheider 7 gewonnene Würze gelangt schließlich in einen Kühlbehälter 9, in dem die Würze auf eine gewünschte Temperatur abgekühlt wird. Anschließend wird die Würze gegebenenfalls unter Zusatz von Hefe in einem Gärbehälter 11 zu Bier vergoren. Zur Überführung der Maische oder der Würze in die entsprechenden Behälter sind diese mittels einer Leitung 12 miteinander verbunden.

Die Vorrichtung 1 weist darüber hinaus eine Trennvorrichtung 13 zur Abtrennung von Spelzen auf, welche in diesem Fall als 6-Walzen-Schrotmühle mit Rüttelsieben zur Spelzentrennung aus dem erzeugten Malzschrot ausgebildet ist. Somit kann mit dieser Trennvorrichtung 13 zur Abtrennung von Spelzen auch der vor dem Einmaischen durchzuführende Schrotprozess vollzogen werden. Darüber hinaus weist die Vorrichtung 1 auch eine nicht näher dargestellte Steuer-, Regel- und/oder Messeinheit zur Steuerung, Regelung und/oder Messung von Prozessparametern auf.

Im Gegensatz zu herkömmlichen Vorrichtungen zur Bierbereitung, bei welchen eine Apparatur zur Abtrennung der Spelzen des Malzes vorhanden ist, ist die Trennvorrichtung 13 zur Abtrennung von Spelzen über geeignete Fördereinrichtungen 15, welche hier als Förderbänder ausgestaltet sind, mit einer Einrichtung 16 zur Verfeuerung von zumindest Teilen der abgetrennten Spelzen verbunden, welche wiederum mit einem Dampfkessel 18 zur Erzeugung für Prozessdampf verbunden ist. Dieser Dampfkessel 18 ist mit einem Dampfleitungsnetz 20, welches aus verschiedenen Dampfleitungen mit einer nicht näher dargestellten Kondensatrückführung sowie nicht näher dargestellten Ventilen zur Absperrung einzelner Leitungen besteht, verbunden. Die Dampfzufuhr zu den einzelnen Sudbehältern kann über eine nicht näher dargestellte Steuer-, Mess- und/oder Regeleinheit eingestellt werden. Über dieses Dampfleitungsnetz 20 können die einzelnen Sudhauseinrichtungen mit Heizdampf versorgt werden.

Anders als bei herkömmlichen Brauprozessen, werden von dem zum Brauen eingesetzten Malz während des Schrotens - also vor dem Einmaischen in den Maischebottich 3 - mittels der Trennvorrichtung 13 35 % der vorher enthaltenen Spelzen im trockenen Zustand entfernt und über die Fördereinrichtungen 15 der Einrichtung 16 zur Verfeuerung zugeführt, während das geschrotete Malz zusammen mit den restlichen Spelzen eingemaischt wird. Da bereits zu Beginn des Brauprozesses, also während des Schrotens, trockene Spelzen zur Einrichtung 16 zur Verfeuerung zugeführt werden, kann aus diesen Spelzen bereits am Anfang des Maischens Energie beziehungsweise Wärme erzeugt werden, mit welcher der Dampfkessel 18 beheizt und somit Prozessdampf für den Brauprozess zur Verfügung gestellt wird. Über das Dampfleitungsnetz 20 wird der erzeugte Prozessdampf bereits für die Aufheizvorgänge beim Maischen verwendet. Nach erfolgtem Maischeprozess wird die Maische, welche im Gegensatz zu herkömmlichen Brauverfahren einen um 35 % geringeren Spelzenanteil aufweist, über die Leitung 12 auf dem Läuterbottich 4 zur Abtrennung der in der Maische enthaltenen Feststoffe zugeleitet. Aufgrund der reduzierten Spelzenmenge bildet sich in dem Läuterbottich 4 eine ausreichende, aber niedrigere Filterschicht aus, welche der zu klärenden Maische einen geringeren Widerstand entgegensetzt. Aus diesem Grund kann der Läuterprozess hier schneller ablaufen als bei herkömmlichen Brauverfahren, ohne hierbei Einbußen in der Qualität beziehungsweise Effektivität des Läutervorgangs hinnehmen zu müssen. Da der Läuterprozess den geschwindigkeitsbestimmenden Schritt im Prozess der Würzebereitung darstellt, resultiert hieraus eine nicht zu unterschätzende Zeitersparnis. Die geklärte Maische beziehungsweise die Würze wird über die Leitung 12 der Würzepfanne 5 zugeführt, in welcher sie aufgeheizt und einer 4-prozentigen Verdampfung unterzogen wird. Die hierfür benötigte Energie wird wiederum zumindest teilweise aus den abgetrennten Spelzen gewonnen und über das Dampfleitungsnetz 20 der Würzepfanne 5 zugeführt. Im Anschluss an die Würzekochung, bei welcher auch die Hopfung erfolgt, gelangt die Würze über die Leitung 12 in den Heißtrubabscheider 7, wo der während der Temperaturbehandlung ausgefallenen Heißtrub abgetrennt wird. Im Anschluss daran gelangt die geklärte Würze über die Leitung 12 zum Kühlbehälter 9, wo sie auf Anstelltemperatur heruntergekühlt wird und im Gegenzug Haupt- und Nachguss des folgenden Brauprozesses auf die benötigten Temperaturen aufgeheizt werden. Über die Leitung 12 wird die gekühlte Würze dem Gärbehälter 11 zugehführt, wo sie nach einer ausreichenden Belüftung vergoren wird.

Da die Würze hier mit einer ursprünglichen Malzschüttung von 16 kg/hl hergestellt wurde und das Malz einen Spelzenanteil von ca. 15 % enthielt, können hiermit bei einer Abtrennung und Verfeuerung von 35 % der ursprünglich im Malz enthaltenen Spelzen ca. 4 kWh/hl an Energie zur Verfügung gestellt werden. Bei einem 50 %igen Hauptgussanteil und einer Einmaischtemperatur von ca. 64° C benötigt der Prozess ohne Einrichtungen zur Wärmerückgewinnung der in den Brüden enthaltenen Energie ca. 6 kWh/hl an thermischer Energie. Somit können unter Vernachlässigung spezifischer Wirkungsgradverluste durch die Spelzenverbrennung bereits ca. zwei Drittel der benötigten Energie bereitgestellt werden. Zur Erzeugung der restlichen Energie, werden der Einrichtung 16 zur Verfeuerung zusätzlich Hackschnitzel und/oder Holzpellets in der Menge zugeführt, dass die gesamte benötigte Wärmeenergie mittels der Einrichtung 16 zur Verfeuerung erzeugt werden kann. Somit kann bei Verwendung der Vorrichtung 1 auf den Einsatz fossiler Brennstoffe für die Würzeherstellung vollkommen verzichtet werden.

Die bei aus der Verfeuerung resultierende Asche wird in einem nicht näher dargestellten Vorratsbehälter gesammelt und zur Düngung von Braugetreide verwendet, wodurch der geschlossene Kreislauf und der Umweltaspekt insbesondere zur Imagesteigerung auch nach außen hin kommuniziert werden kann.

In einer anderen Ausgestaltung ist die Würzepfanne 5 als Rektifikationswürzekochsysytem ausgebildet, wodurch eine identische Abreicherung unerwünschter Würzearomastoffe mit nur ca. 1 % Gesamtverdampfung erzielt werden kann. Hierdurch verringert sich die zur Herstellung der Würze benötigte Energie unter Vernachlässigung spezifischer Wirkungsgradverluste auf ca. 4 kWh/hl, wodurch bereits bei der angegebenen 35 %igen Reduktion des Spelzenzusatzes die gesamte Energie für die Würzebereitung allein aus der erfindungsgemäßen Verfeuerung der abgetrennten Spelzen zur Verfügung gestellt werden kann. Durch eine Variation des Anteils der abgetrennten und verfeuerten Spelzen sowie durch die zusätzliche Verbrennung von in der Brauerei anfallenden (Abfall-) Stoffen kann darüber hinaus auf einen schwankenden oder zusätzlichen Energiebedarf problemlos reagiert werden.

Durch die Erfindung können Brauereien somit den Hauptanteil der benötigten Energie selbst erzeugen, wodurch nicht nur deren Unabhängigkeit steigt, sondern sich vor allem auch enorme monetäre Vorteile ergeben.

### Bezugszeichenliste

- 1: Vorrichtung
- 3: Maischebottich
- 4: Läuterbottich/Läutereinrichtung
- 5: Würzepfanne
- 7: Heißtrubabscheider (Whirlpool)
- 9: Kühlbehälter
- 11: Gärbehälter
- 12: Leitung
- 13: Trennvorrichtung zur Abtrennung der Spelzen
- 15: Fördereinrichtung
- 16: Einrichtung zur Verfeuerung
- 18: Dampfkessel
- 20: Dampfleitungsnetz

## Patentansprüche

1. Verfahren zur Bierbereitung, wobei aus Malz eine Maische hergestellt, aus der Maische durch einen Läuterprozess eine Würze gewonnen, die Würze einer Temperaturbehandlung unterzogen, aus der behandelten Würze der Heißtrub abgeschieden, und nach der Heißtrubabscheidung aus der Würze durch eine Gärung Bier gewonnen wird,
**dadurch gekennzeichnet,**
**dass** die Spelzen vor dem Einmaischen teilweise vom Malz abgetrennt werden, wobei der Anteil der teilweise vom Malz abgetrennten Spelzen beim Einsatz eines Läuterbottichs zwischen 10 und 60 % und beim Einsatz eines Maischefilters oder einer Zentrifuge zur Läuterung zwischen 30 und 95 % beträgt, und die restlichen der im verwendeten Malz vorhandenen Spelzen dem Brauprozess wieder zugeführt werden,
wobei das Verfahren ferner **dadurch gekennzeichnet ist, dass** alle abgetrennten Spelzen im trockenen Zustand zur Energiegewinnung verfeuert werden und die bei der Verfeuerung frei werdende Energie für den Brauprozess genutzt wird,
wobei die Reduktion des Spelzenzusatzes zum Brauprozess beim Einsatz eines Läuterbottichs zwischen 10 und 60 % und beim Einsatz eines Maischefilters oder einer Zentrifuge zur Läuterung zwischen 30 und 95 % beträgt.

2. Verfahren nach Anspruch 1, **dadurch gekennzeichnet, dass** die bei der Verfeuerung frei werdende Energie für die Würzebereitung genutzt wird.

3. Verfahren nach einem der Ansprüche 1 oder 2, **dadurch gekennzeichnet, dass** der Läuterprozess mittels eines Läuterbottichs durchgeführt wird, wobei vorzugsweise zwischen 20 und 60 % der Spelzen des verwendeten Malzes zur Energiegewinnung verfeuert werden.

4. Verfahren nach einem der Ansprüche 1 oder 2, **dadurch gekennzeichnet dass** der Läuterprozess mittels eines Maischefilters durchgeführt wird, wobei vorzugsweise zwischen 50 und 80 % der Spelzen des verwendeten Malzes zur Energiegewinnung verfeuert werden.

5. Verfahren nach einem der Ansprüche 1 bis 4, **dadurch gekennzeichnet, dass** die Abtrennung der Spelzen durch Zerkleinern des Malzes und anschließendes Abtrennen der Spelzenreste erfolgt.

6. Verfahren nach einem der Ansprüche 1 bis 4, **dadurch gekennzeichnet, dass** die Abtrennung der Spelzen durch ein Schälen des Malzes und anschließendes Abtrennen der Spelzenreste erfolgt.

7. Verfahren nach einem der vorhergehenden Ansprüche, **dadurch gekennzeichnet, dass** zusätzlich zum Malz ein Rohfruchtanteil verwendet wird, wobei insbesondere die Schale der Rohfrucht vor dem Einmaischen ebenfalls zumindest teilweise von der Rohfrucht abgetrennt wird und zumindest ein Teil der abgetrennten Schale zur Energiegewinnung verfeuert wird.

8. Verfahren nach einem der vorhergehenden Ansprüche, **dadurch gekennzeichnet, dass** die Spelzen während des Brauprozesses unmittelbar vor dem Einmaischen vom Malz abgetrennt werden.

9. Verfahren nach einem der vorhergehenden Ansprüche, **dadurch gekennzeichnet, dass** zusätzlich zu den Spelzen und/oder den Schalen noch weitere Brennstoffe, insbesondere Pellets und/oder Hackschnitzel, zur Energiegewinnung verfeuert werden, welche insbesondere mit den Spelzen und/oder Schalen vermischt werden.

10. Verfahren nach einem der vorhergehenden Ansprüche, **dadurch gekennzeichnet, dass** die bei der Verfeuerung entstehende Abwärme zum Trocknen von weiteren Stoffen, insbesondere von Treber, verwendet wird, wobei die getrockneten weiteren Stoffe, insbesondere der getrocknete Treber, ebenfalls zur Energiegewinnung verfeuert werden.

## Claims

1. Method for the preparation of beer, wherein a mash is produced from malt, a wort is obtained from the mash by means of a lautering process, the wort is subjected to a heat treatment, the hot trub is separated from the treated wort and, after separation of the hot trub, beer is obtained from the wort by fermentation,
**characterized in that**
the husks are partially removed from the malt before the mashing, wherein the proportion of husks partially removed from the malt is between 10 and 60% when using a lauter tun and is between 30 and 95% when using a mash filter or a centrifuge for lautering, and the remaining husks present in the malt used are fed back to the brewing process,
wherein the method is further **characterized in that** all the removed husks are burned in the dry state for the purpose of generating energy and the energy released during the burning is used for the brewing process,
wherein the reduction of the husk addition to the brewing process is between 10 and 60% when using a lauter tun and is between 30 and 95% when using a mash filter or a centrifuge for lautering.

2. Method according to claim 1, **characterized in that** the energy released during the burning is used for wort preparation.

3. Method according to any of claims 1 or 2, **characterized in that** the lautering process is carried out using a lauter tun, wherein preferably between 20 and 60% of the husks of the malt used are burned for the purpose of generating energy.

4. Method according to any of claims 1 or 2, **characterized in that** the lautering process is carried out using a mash filter, wherein preferably between 50 and 80% of the husks of the malt used are burned for the purpose of generating energy.

5. Method according to any of claims 1 to 4, **characterized in that** the husks are removed by crushing the malt and then removing the husk remnants.

6. Method according to any of claims 1 to 4, **characterized in that** the husks are removed by shelling the malt and then removing the husk remnants.

7. Method according to any of the preceding claims, **characterized in that** a proportion of raw grain is used in addition to the malt, wherein in particular the shell of the raw grain is likewise at least partially removed from the raw grain before the mashing and at least a portion of the removed shell is burned for the purpose of generating energy.

8. Method according to any of the preceding claims, **characterized in that** the husks are removed from the malt during the brewing process immediately before the mashing.

9. Method according to any of the preceding claims, **characterized in that**, in addition to the husks and/or the shells, further fuels, in particular pellets and/or wood chips, are burned for the purpose of generating energy, said further fuels in particular being mixed with the husks and/or shells.

10. Method according to any of the preceding claims, **characterized in that** the heat generated during the burning is used for drying other materials, in particular spent grains, wherein the dried other materials, in particular the dried spent grains, are also burned for the purpose of generating energy.

## Revendications

1. Procédé de préparation de bière, dans lequel on fabrique à partir de maïs un empâtage, on tire de l'empâtage un moût par un procédé d'affinage, on soumet le moût à un traitement à température, on sépare du moût traité le dépôt à chaud et, après la séparation du dépôt à chaud, on tire du moût de la bière par fermentation,
**caractérisé en ce que** :
les glumes sont retirées en partie du malt avant le brassage, dans lequel la fraction des glumes séparées en partie du malt atteint lors de l'utilisation d'une cuve de clarification entre 10 et 60 % et lors de l'utilisation d'un filtre de moût ou d'une centrifugeuse de clarification entre 30 et 95 % et les glumes restantes présentes dans le moût utilisé sont renvoyées au processus de brassage,
dans lequel le procédé est en outre **caractérisé en ce que** toutes les glumes séparées sont brûlées à l'état sec pour récupérer de l'énergie et l'énergie libérée lors du brûlage est utilisée pour le processus de brassage,
dans lequel la réduction de l'addition de glumes au processus de brassage lors de l'utilisation d'une cuve de clarification se situe entre 10 et 60% et lors de l'utilisation d'un filtre de moût ou d'une centrifugeuse de clarification entre 30 et 95 %.

2. Procédé selon la revendication 1, **caractérisé en ce que** l'énergie libérée lors du brûlage est utilisée pour la préparation du moût.

3. Procédé selon l'une quelconque des revendications 1 ou 2, **caractérisé en ce que** le processus de clarification est effectué au moyen d'une cuve de clarification, dans lequel de préférence entre 20 et 60 % des glumes du malt utilisé sont brûlées pour récupérer de l'énergie.

4. Procédé selon l'une quelconque des revendications 1 ou 2, **caractérisé en ce que** le processus de clarification est effectué au moyen d'un filtre de moût, dans lequel de préférence entre 50 et 80 % des glumes du malt utilisé sont brûlées pour récupérer de l'énergie.

5. Procédé selon l'une quelconque des revendications 1 à 4, **caractérisé en ce que** la séparation des glumes se fait par broyage du malt et ensuite séparation des résidus de glumes.

6. Procédé selon l'une quelconque des revendications 1 à 4, **caractérisé en ce que** la séparation des glumes se fait par décorticage du malt et ensuite séparation des résidus de glumes.

7. Procédé selon l'une quelconque des revendications précédentes, **caractérisé en ce que** l'on utilise en plus du malt une fraction de grain cru, dans lequel la coque du grain cru est également séparée au moins en partie du grain cru avant le brassage et au moins une partie de la coque séparée est brûlée pour récupérer de l'énergie.

8. Procédé selon l'une quelconque des revendications précédentes, **caractérisé en ce que** les glumes sont séparées du malt directement avant le brassage au cours du processus de brassage.

9. Procédé selon l'une quelconque des revendications précédentes, **caractérisé en ce que** l'on brûle en plus des glumes et/ou des coques encore d'autres combustibles, en particulier des pellets et/ou des copeaux de bois pour récupérer de l'énergie, qui sont en particulier mélangés aux glumes et/ou aux coques.

10. Procédé selon l'une quelconque des revendications précédentes, **caractérisé en ce que** la chaleur dissipée produite lors du brûlage est utilisée pour le séchage d'autres matières, en particulier de drêches de brasserie, dans lequel les autres matières séchées, en particulier les drêches séchées sont également utilisées pour récupérer de l'énergie.
